# EUROPÄISCHE PATENTANMELDUNG

(11) **EP 1 795 806 A2**
(43) Veröffentlichungstag der Anmeldung: **13.06.2007**
(21) Anmeldenummer: 06125367.0
(22) Anmeldetag: 04.12.2006
(51) Int. Cl.: F23M 5/00

(54) **Heisskammer**

(30) Priorität: 06.12.2005 DE 102005059502
(71) Anmelder: Deutsches Zentrum für Luft- und Raumfahrt e.V., 51147 Köln (DE)
(72) Erfinder: Ortelt, Markus, 74078 Heilbronn (DE); Hald, Hermann, 71287 Weissach (DE); Haidn, Oskar, 74243 Langenbeutingen (DE); Greuel, Dirk, 74219 Möckmühl (DE)
(74) Vertreter: Hoeger, Stellrecht & Partner Patentanwälte

(57) **Zusammenfassung**

Um eine Heißkammer, umfassend mindestens einen Heißraum, mindestens eine Heißkammerwand, welche den Heißraum begrenzt, und mindestens eine Hüllenstruktur, welche eine Heißkammerwand umgibt und/oder von einer Heißkammerwand umgeben ist, bereitzustellen, welche zuverlässig ist unter hoher Sicherheit, ist vorgesehen, dass zwischen der Heißkammerwand und der Hüllenstruktur eine Schale angeordnet ist, welche mindestens in Teilbereichen an der Heißkammerwand und an der Hüllenstruktur anliegt, und dass die Schale so ausgebildet ist, dass sie in einer Abstandsrichtung zwischen der Heißkammerwand und der Hüllenstruktur und in einer Querrichtung zu dieser Abstandsrichtung dehnbar ist.

## Beschreibung

Die Erfindung betrifft eine Heißkammer, umfassend mindestens einen Heißraum, mindestens eine Heißkammerwand, welche den Heißraum begrenzt, und mindestens eine Hüllenstruktur, welche eine Heißkammerwand umgibt und/oder von einer Heißkammerwand umgeben ist.

Eine Brennkammer als Beispiel einer Heißkammer ist in der WO 99/04156 A1 beschrieben. Diese Brennkammer (insbesondere für ein Raketentriebwerk) umfasst einen Brennraum als Heißraum, einen den Brennraum umschließenden Innenmantel (Heißkammerwand) und einen den Innenmantel umschließenden Außenmantel (Hüllenstruktur). Der Außenmantel ist aus einem Faserkeramikmaterial gebildet und der Innenmantel ist aus einem Faserkeramikmaterial oder aus Graphit gebildet.

Der Erfindung liegt die Aufgabe zugrunde, eine Heißkammer der eingangs beschriebenen Art bereitzustellen, welche zuverlässig ist unter hoher Sicherheit.

Diese Aufgabe wird bei der eingangs genannten Heißkammer erfindungsgemäß dadurch gelöst, dass zwischen der Heißkammerwand und der Hüllenstruktur eine Schale angeordnet ist, welche mindestens in Teilbereichen an der Heißkammerwand und an der Hüllenstruktur anliegt, und dass die Schale so ausgebildet ist, dass sie in einer Abstandsrichtung zwischen der Heißkammerwand und der Hüllenstruktur und in einer Querrichtung zu dieser Abstandsrichtung dehnbar ist.

Grundsätzlich ist eine Heißkammer thermisch belastet und mechanisch belastet. Durch die erfindungsgemäße Lösung lässt sich eine hohe thermisch-mechanische Tragfähigkeit bereitstellen, wobei sowohl in stationären Betriebsphasen als auch in transienten Betriebsphasen eine hohe Zuverlässigkeit und hohe Sicherheit erreichbar ist.

Die Schale kann aufgrund ihrer Dehnungsmöglichkeiten aufgezwungenen Dehnungen der Heißkammerwand und der Hüllenstruktur folgen und dadurch zum Spaltausgleich dienen. Es ist grundsätzlich möglich, dass die Schale aufgrund ihrer Eigenelastizität vorgespannt wird oder von innen oder von außen unter Überdruck steht. Die radiale bzw. umfangsgerichtete Weichheit der Schale lässt sich durch die stützende Hüllenstruktur bzw. Heißkammerwand auffangen.

Die Schale kann auch Längslasten aufnehmen; dadurch kann beispielsweise ein Triebwerkschub oder eine Seitenlast einer Düse über die Schale auf eine Tragstruktur des mit dem Triebwerk/der Düse versehenen Objekts übertragen werden.

Auch bei asymmetrischer Belastung erfolgt ein Ausgleich durch die Schale, so dass Zwangsspannungen verhindert oder zumindest reduziert werden.

Durch die Schale wird eine Verbindung zwischen der Hüllenstruktur und der Heißkammerwand bereitgestellt, wobei sich das Auftreten kritischer Zwangsspannungen oder Versagungsspannungen durch die Schale in ihrer Anpassung an das Verhalten der Heißkammerwand und der Hüllenstruktur verhindern lässt.

Die Schale lässt sich fluiddicht ausbilden und beispielsweise als Diffusionssperre ausbilden, so dass sich eine hohe Dichtigkeit auch bei einer porösen Heißkammerwand erreichen lässt. Poröse Heißkammerwände werden im Zusammenhang mit der Effusionskühlung oder Transpirationskühlung verwendet.

Zur Verbindung zwischen der Heißkammerwand und der Hüllenstruktur über die Schale genügt es grundsätzlich, wenn kleine Kontaktbereiche vorliegen. Dadurch lassen sich Wärmebrücken verhindern. Zwischen der Schale und der Heißkammerwand und gegebenenfalls auch zwischen der Schale und der Hüllenstruktur sind Spalte bereitgestellt, die sich großflächig durch Kühlmittel umspülen lassen. Dadurch ist es beispielsweise möglich, das poröse Volumen einer Heißkammerwand vollständig als Wärmetauschraum insbesondere für die Effusionskühlung oder Transpirationskühlung zu nutzen.

Die Schale lässt sich auf einfache Weise beispielsweise über Drahterodieren oder spanabhebende Verarbeitung herstellen. Es ergibt sich eine einfache Montage. Die Bauteile lassen sich ineinanderschieben. Es kann dabei eine lösbare Verbindung vorgesehen sein, so dass beim Ausfall eines Bauteils dieses auf einfache Weise ersetzbar ist.

Die erfindungsgemäße Heißkammer kann beispielsweise als Brennkammer für ein Raketentriebwerk eingesetzt werden. Sie kann in einem Rohr-, Behälter- oder Speichersystem eingesetzt werden. Sie kann beispielsweise auch in einem Wärmetauscher eingesetzt werden. Sie eignet sich für allgemeine Tragstrukturen. Die erfindungsgemäße Heißkammer kann auch eingesetzt werden, wenn keine thermischen Belastungen sondern nur mechanische Belastungen vorliegen wie beispielsweise an einem Tank; die Heißkammer ist dann beispielsweise eine Aufnahmekammer für ein unter Druck stehendes Medium. Das Medium kann heiß oder kalt gegenüber der Umgebung sein.

Insbesondere ist die Schale aufgrund thermischer und/oder mechanischer Belastung dehnbar. Dadurch wird eine hohe thermische Tragfähigkeit bzw. mechanische Tragfähigkeit oder thermisch-mechanische Tragfähigkeit bereitgestellt.

Insbesondere ist die Schale elastisch ausgebildet. Dadurch lässt sich auf einfache Weise erreichen, dass sie in der Abstandsrichtung und in der Querrichtung zu der Abstandsrichtung dehnbar ist. Ferner lässt sich der Zusammenbau erleichtern, da durch Zusammendrücken der Schale deren Durchmesser verringert werden kann, um so eine Hüllenstruktur aufschieben zu können. Ferner lässt es sich aufgrund der Elastizität vermeiden, dass für die Ausbildung/Herstellung von Anschlüssen Halbschalenverfahren eingesetzt werden müssen.

Es kann vorgesehen sein, dass die Schale die Heißkammerwand umgibt oder von dieser umgeben ist. Beispielsweise ist der Heißraum ein zylindrischer Raum und die Schale umgibt dann entsprechend die Heißkammerwand, in welcher der zylindrische Heißraum gebildet ist. Es ist auch möglich, dass der Heißraum ein Ringraum ist und die Heißkammerwand eine Schale umgibt.

Insbesondere ist die Schale umfänglich geschlossen. Dadurch lässt sich über die gesamte Heißkammerwand eine Diffusionsbarriere ausbilden.

Insbesondere ist die Schale aus einem metallischen Material hergestellt. Dadurch weist die Schale eine entsprechende Elastizität mit thermischen Dehnungsmöglichkeiten in der Abstandsrichtung und quer zur Abstandsrichtung auf. Es ist auch möglich, Kunststoffmaterialien, keramische Werkstoffe oder Verbundwerkstoffe, insbesondere Faserverbundwerkstoffe, für die Schale zu verwenden. Je nach Anwendung muss die Schale beispielsweise dicht sein oder nicht, sie muss Längslasten auffangen können oder nicht usw. Der Werkstoff wird nach den speziell vorliegenden Anforderungen gewählt.

Insbesondere weist die Schale erste Querstege und zweite Querstege auf, welche in der Abstandsrichtung zwischen der Heißkammerwand und der Hüllenstruktur beabstandet sind und welche quer zu dieser Abstandsrichtung orientiert sind. Bei einer solchen Ausbildung ergeben sich thermische Dehnungsmöglichkeiten sowohl in Abstandsrichtung als auch quer zur Abstandsrichtung. Beispielsweise lassen sich so thermische Dehnungen in Aufbiegungen transformieren.

Insbesondere sind ein erster Quersteg und ein benachbarter zweiter Quersteg aufgrund thermischer Dehnung relativ zueinander in der Abstandsrichtung und quer zur Abstandsrichtung beweglich. Dadurch ergeben sich Dehnungsmöglichkeiten zum Spaltausgleich, wobei die Schale aufgezwungenen Dehnungen der Heißkammerwand und/oder der Hüllenstruktur folgen kann.

Vorzugsweise sind benachbarte erste Querstege und zweite Querstege in der Querrichtung zur Abstandsrichtung zueinander versetzt. Dadurch können die ersten Querstege einer Innenkontur der Hüllenstruktur folgen und die zweiten Querstege können einer Außenkontur der Heißkammerwand folgen.

Günstigerweise sind benachbarte erste Querstege und zweite Querstege über jeweilige Verbindungsstege verbunden. Dadurch ergibt sich ein geschlossener polygonaler Konturverlauf der Schale mit den entsprechenden thermischen Dehnungsmöglichkeiten in der Abstandsrichtung und quer zur Abstandsrichtung.

Zwischen benachbarten Verbindungsstegen, welche an einem ersten Quersteg angeordnet sind, ist vorzugsweise ein Freiraum gebildet, um eine thermische Dehnung zu ermöglichen, die insbesondere in eine Biegung transformierbar ist.

Aus dem gleichen Grund ist es günstig, wenn zwischen benachbarten Verbindungsstegen, welche an einem zweiten Quersteg angeordnet sind, ein Freiraum gebildet ist.

Günstigerweise ist ein Verbindungssteg mindestens näherungsweise in der Abstandsrichtung zwischen der Heißkammerwand und der Hüllenstruktur orientiert. Dadurch lässt sich eine thermische Dehnungsmöglichkeit in der Abstandsrichtung erreichen.

Günstigerweise ist die Dicke der ersten Querstege und der zweiten Querstege jeweils kleiner als deren Abstand in der Abstandsrichtung. Dadurch lässt sich eine dünne Schale ausbilden, welche thermische Dehnungsmöglichkeiten in der Abstandsrichtung und quer zur Abstandsrichtung (insbesondere in Radialrichtung in einer Umfangsrichtung) aufweist. Die Schale lässt sich dann auch leicht herstellen.

Aus dem gleichen Grund ist es günstig, wenn die Dicke der Verbindungsstege kleiner ist als der Abstand benachbarter Verbindungsstege.

Bei einer bevorzugten Ausführungsform ist die Schale mäanderförmig ausgebildet. Sie weist dadurch thermische Dehnungsmöglichkeiten in der Abstandsrichtung und quer zur Abstandsrichtung auf. Insbesondere weist sie Dehnungsmöglichkeiten in radialer Richtung und in Umfangsrichtung auf. Eine thermische Dehnung in einer Umfangsrichtung lässt sich in eine Biegung transformieren.

Günstig ist es, wenn die Schale fluiddicht ausgebildet ist. Dadurch ist ein Schalenmantel gebildet, über den beispielsweise bei einer porösen Heißkammerwand das seitliche Austreten von Medium verhinderbar ist. Ferner lässt sich über eine solche Schale Kühlmittel der Heißkammerwand zuführen.

Insbesondere ist die Schale als Diffusionsbarriere zwischen Heißkammerwand und Hüllenstruktur ausgebildet. Dadurch wird die Durchdiffusion von Medium durch die Schale gesperrt.

Günstig ist es, wenn zwischen der Schale und der Heißkammerwand und/oder der Hüllenstruktur Spalte gebildet sind. Durch solche Spalte lässt sich Kühlmedium durchführen, um für eine Kühlung der Heißkammerwand zu sorgen.

Weiterhin lassen sich Wärmebrücken zwischen der Schale und der Heißkammerwand sowie zwischen der Hüllenstruktur und der Schale minimieren. Dadurch lässt sich eine thermische Entkopplung erreichen.

Insbesondere sind in axialer Richtung durchgehende Spalte zur Kühlmittelbeaufschlagung der Heißkammerwand gebildet. Dadurch lässt sich Kammerwandkühlmittel bereitstellen, wobei sich Kühlmittel flächig bereitstellen lässt.

Weiterhin ist es günstig, wenn Spalte zur thermischen Entkopplung von Schale und Heißkammerwand und/oder Hüllenstruktur gebildet sind.

Insbesondere erstreckt sich die Schale über die axiale Länge der Heißkammerwand. Dadurch lässt sich die Verbindung zwischen der Hüllenstruktur und der Heißkammerwand über einen großen Flächenbereich erreichen.

Es ist vorgesehen, dass die Schale der Kontur der Heißkammerwand folgt. Dadurch lässt sich eine gute Verbindung erreichen; innerhalb einer Ausnehmung der Heißkammerwand ist die Längenänderung der einzelnen Schalenelemente an sich gering. Über die Gesamtheit der Schale wird die Haltefunktion der Schale an der Heißkammerwand trotz thermischer Dehnungen nicht beeinträchtigt.

Bei einer Ausführungsform ist die Heißkammerwand porös ausgebildet. Es lässt sich dadurch eine Effusionskühlung (Schwitzkühlung ohne Phasenübergang) oder Transpirationskühlung (Schwitzkühlung mit Phasenübergang) realisieren. Eine entsprechende Brennkammer ist in der WO 99/04156 A1 offenbart. Auf diese Druckschrift wird ausdrücklich Bezug genommen.

Günstig ist es, wenn die Heißkammerwand der Hüllenstruktur zugewandt beabstandete Ausnehmungen aufweist, in welche jeweils ein oder mehrere zweite Querstege der Schale eingetaucht sind. Dadurch kann die Schale mit einer Einhüllenden dem Konturverlauf einer Einhüllenden der Heißkammerwand folgen, wobei für die Schale thermische Dehnungsmöglichkeiten in Abstandsrichtung und quer zur Abstandsrichtung realisierbar sind.

Insbesondere sind mindestens zwei Verbindungsstege der Schale in eine zugeordnete Ausnehmung mindestens teilweise eingetaucht. Über die Verbindungsstege ist eine thermische Dehnungsmöglichkeit der Schale in der Abstandsrichtung realisierbar.

Ganz besonders vorteilhaft ist es, wenn in eine zugeordnete Ausnehmung ein oder mehrere Bügel der Schale mindestens teilweise eingetaucht sind. Solche Bügel oder Lamellen erlauben eine thermische Dehnung der Schale sowohl in Abstandsrichtung als auch quer zur Abstandsrichtung.

Insbesondere ist ein Bügel durch einen zweiten Quersteg und an dem zweiten Quersteg beabstandet angeordnete Verbindungsstege zu einem ersten Quersteg oder dritten Quersteg gebildet. Der erste Quersteg ist dabei insbesondere ein Quersteg, welcher benachbarte Bügel außerhalb der zugeordneten Ausnehmung verbindet. Der dritte Quersteg ist ein Quersteg, welcher benachbarte Bügel innerhalb einer Ausnehmung verbindet.

Es hat sich als günstig erwiesen, wenn in einer zugeordneten Ausnehmung mindestens ein erster Bügel und ein beabstandeter zweiter Bügel mindestens teilweise eingetaucht sind. Dadurch ragen in eine Ausnehmung mindestens zwei Bügel. Es ergibt sich dadurch eine hohe thermisch-mechanische Belastbarkeit aufgrund einer hohen mechanischen Flexibilität; der Verformungsweg an den Querstegen wird individuell verringert, da jetzt mindestens zwei Querstege in die jeweiligen Ausnehmungen eingetaucht sind.

Günstig ist es, wenn zwischen dem ersten Bügel und dem zweiten Bügel ein Freiraum liegt. Dadurch ist eine relative Beweglichkeit des ersten Bügels zu dem zweiten Bügel möglich.

Es hat sich als günstig erwiesen, wenn zwischen benachbarten Verbindungsstegen des ersten Bügels und/oder des zweiten Bügels mindestens ein Füllelement angeordnet ist. Dieses Füllelement ist beispielsweise durch ein Plättchen gebildet. Für eine erfindungsgemäße Heißkammer gibt es zwei besondere Lastfälle, nämlich zum einen den Montagefall, bei dem die Schale stark gedehnt werden kann, und den Betriebsfall mit hoher Innendrucklast. Durch das Füllelement an einem Bügel wird die Belastung der Schale bei Innendruckbelastung der Heißkammer verringert, da gewissermaßen eine Abstützung der Verbindungsstege eines Bügels aneinander vermittelt über das Füllelement ermöglicht ist. Die Füllelemente werden vorzugsweise erst nach der Montage der Schale an der Heißkammerwand zwischen die Verbindungsstege eingeschoben.

Günstig ist es, wenn die Heißkammerwand der Hüllenstruktur zugewandt eine mäanderförmige Außenkontur aufweist. Dadurch kann die Schale mäanderförmig ausgebildet werden, wobei die Schale dem Konturverlauf der Heißkammerwand folgen kann.

Bei einer Ausführungsform ist die Heißkammerwand aus einem faserverstärkten Material hergestellt. Insbesondere ist die Heißkammerwand aus C/C und insbesondere aus C/C-Keramik hergestellt. Ein solches Material ist durch Kohlenstofffasern faserverstärkt. Es hat sich gezeigt, dass eine solche Heißkammerwand günstige Eigenschaften aufweist (vgl. die WO 99/04156 A1).

Es kann vorgesehen sein, dass die Hüllenstruktur aus einem metallischen Material hergestellt ist.

Es ist auch möglich, dass die Hüllenstruktur aus dem Faserverbundwerkstoff (CFK-Material) hergestellt ist.

Insbesondere ist die Hüllenstruktur als Mantel ausgebildet. Dadurch lässt sich die Hüllenstruktur auf die Heißkammerwand mit der Schale aufschieben bzw. die Hüllenstruktur lässt sich in die Heißkammerwand mit der Schale einschieben. Dadurch wiederum lässt sich eine einfache Herstellbarkeit realisieren. Ferner lässt sich dadurch auch eine lösbare Verbindung von Heißkammerwand, Schale und Hüllenstruktur erreichen. Dies wiederum ermöglicht einen einfachen Austausch einer beschädigten Komponente.

Die Heißkammerwand, die Schale und die Hüllenstruktur lassen sich auf einfache Weise gegeneinander fixieren, wenn mindestens ein Halteflansch und mindestens ein Stirnflansch vorgesehen sind, welche miteinander fixiert sind.

Insbesondere ist der mindestens eine Halteflansch so ausgebildet, dass er in axialer Richtung zu einer Stirnseite der Heißkammer an der Schale anliegt. Dadurch lässt sich auf einfache Weise eine axiale Verspannung von Heißkammerwand, Schale und Stirnflansch erreichen.

Insbesondere ist der mindestens eine Halteflansch an der Schale angeordnet. Beispielsweise umgibt der mindestens eine Halteflansch die Schale. Er ist dann vorzugsweise als Klemmring ausgebildet, welcher auf die Schale aufschiebbar ist.

Es kann vorgesehen sein, dass der mindestens eine Stirnflansch an einer Stirnseite der Heißkammer anliegt. Dadurch ist seine Beweglichkeit in axialer Richtung gesperrt und es wird ein Gegenlager für eine Klemmverbindung bereitgestellt.

Insbesondere sind der mindestens eine Halteflansch, die Schale und der mindestens eine Stirnflansch axial miteinander verspannt, um eine Fixierung zu erreichen. Bei einer solchen Ausführungsform lässt sich auch auf einfache Weise eine stirnseitige Abdichtung erreichen.

Insbesondere ist zwischen einer Stirnseite der Schale und dem mindestens einen Stirnflansch mindestens eine Dichtung angeordnet. Beispielsweise ist mindestens eine ringförmige Foliendichtung angeordnet. Wenn eine Verspannung zwischen dem Halteflansch und dem Stirnflansch erreicht ist, dann lässt sich auch eine Verspannung der Dichtung erreichen, um eine hohe Dichtwirkung zu erzielen.

Insbesondere steht die mindestens eine Dichtung unter axialer Spannung, um eine hohe Dichtwirkung zu erzielen.

Es kann dabei zwischen dem mindestens einen Stirnflansch und der Schale mindestens eine Foliendichtung angeordnet sein. Diese lässt sich auf einfache Weise positionieren.

Insbesondere ist mindestens eine Dichtung vorgesehen, welche vorgespannt ist. Beispielsweise ist eine Federringdichtung vorgesehen, welche entsprechend vorgespannt ist. Die Dichtung übt dann einen entsprechenden "Dichtungsdruck" aus, um eine sichere Dichtwirkung zu erzielen.

Es kann vorgesehen sein, dass die Dichtung durch ein Kühlmittelreservoir druckbeaufschlagbar ist. Beispielsweise ist ein Aufnahmeraum für die Dichtung so mit Kühlmittelkanälen verbunden, dass bei Versagen einer anderen Dichtung der Kühlmittelreservoirdruck auf die Dichtung wirkt und für eine zusätzliche Verspannung sorgt.

Günstig ist es, wenn der mindestens eine Stirnflansch mindestens eine Haltenase aufweist, durch welche die Beweglichkeit der Schale in der Abstandsrichtung zwischen der Hüllenstruktur und der Heißkammerwand gesperrt ist. Dadurch wird für eine entsprechende Fixierung und insbesondere radiale Fixierung der Schale gesorgt.

Es ist ferner günstig, wenn durch den mindestens einen Stirnflansch eine Aufnahme für ein Anschlusselement gebildet ist oder ein Anschlusselement an dem mindestens einen Stirnflansch gebildet ist oder ein Anschlusselement mit dem Stirnflansch verbindbar ist. Dadurch lässt sich ein Anschlusselement wie beispielsweise eine Düse auf einfache Weise an der Heißkammer anordnen. Insbesondere lässt sich auch ein keramisches Anschlusselement auf einfache Weise an der Heißkammer fixieren.

Es kann vorgesehen sein, dass die Schale in Richtung zu der Heißkammerwand hin oder in Richtung von der Heißkammerwand weg druckbeaufschlagt ist. Dadurch lässt sich die Beulstabilität der Schale erhöhen.

Es hat sich günstig erwiesen, wenn die Schale an mindestens einem Ende mindestens einen Flansch aufweist. Der Flansch stellt eine Anlagefläche für einen Halteflansch und/oder einen Stirnflansch bereit.

Ganz besonders vorteilhaft ist es, wenn der mindestens eine Flansch zu dem Ende hin abgeschrägt ist. Dies erleichtert die Montage der Heißkammer. Über die Schräge lässt sich über Aufbringen einer axialen Kraft eine radiale Kraft zur Stauchung der Schale erreichen. Diese lässt sich dadurch zusammenpressen, um beispielsweise das Aufschieben der Hüllenstruktur zu ermöglichen.

Günstigerweise ist zwischen benachbarten Flanschen eine Ausnehmung gebildet, wenn eine Mehrzahl von Flanschen vorgesehen ist. In diese Ausnehmung kann ein entsprechendes Element beispielsweise eines Halteflansches eintauchen. Dadurch lässt sich eine höhere Fixierungs- und Haltefestigkeit erreichen.

Es hat sich als günstig erwiesen, wenn an der Schale Stützelemente angeordnet sind, welche im Normalbetrieb beabstandet zu der Heißkammerwand sind und an welchen sich die Heißkammerwand im Überlastfall zur Bereitstellung eines Kraftpfads zur Hüllenstruktur abstützen kann. Im Normalbetriebsfall berühren die Stützelemente der Schale die Heißkammerwand nicht. Im Überlastfall liegt die Heißkammerwand an mindestens einem Stützelement an, so dass Kräfte über die Stützelemente in die Hüllenstruktur einleitbar sind.

Die erfindungsgemäße Heißkammer kann als Brennkammer ausgebildet sein, beispielsweise für ein Raketentriebwerk. Es lässt sich dadurch auf effektive Weise eine effusionsgekühlte oder transpirationsgekühlte Brennkammer bereitstellen.

Es ist auch möglich, dass die Heißkammer in einem Wärmetauscher oder einer Speichervorrichtung verwendet wird.

Die nachfolgende Beschreibung bevorzugter Ausführungsformen dient im Zusammenhang mit der Zeichnung der näheren Erläuterung der Erfindung. Es zeigen:
- Figur 1: eine Schnittansicht eines ersten Ausführungsbeispiels einer erfindungsgemäßen Heißkammer;
- Figur 2: eine perspektivische Ansicht der Heißkammer gemäß Figur 1 ohne Hüllenstruktur;

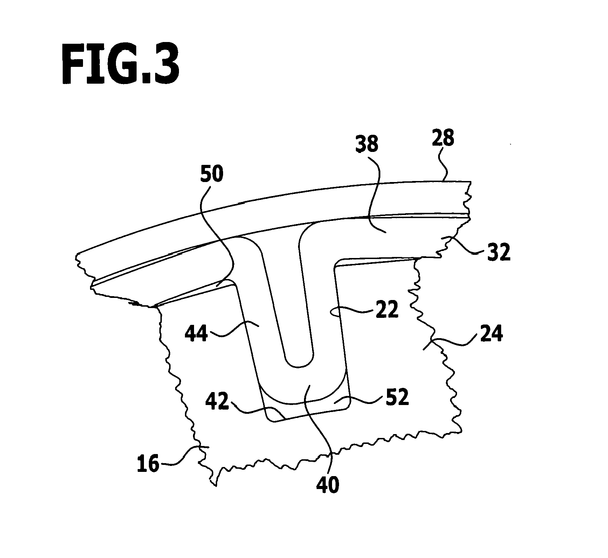

- Figur 3: eine vergrößerte Darstellung des Bereichs A gemäß Figur 1;
- Figur 4(a) und Figur 4(b): eine Detailansicht eines Ausführungsbeispiels einer Schale mit den thermischen Dehnungsmöglichkeiten;
- Figur 5: eine perspektivische Ansicht eines zweiten Ausführungsbeispiels einer Heißkammer;
- Figur 6: eine Vorderansicht auf die Heißkammer gemäß Figur 5;
- Figur 7: eine Schnittansicht längs der Linie 7-7 gemäß Figur 6;
- Figur 8: eine Schnittansicht längs der Linie 8-8 gemäß Figur 6;
- Figur 9: eine vergrößerte Darstellung des Bereichs B gemäß Figur 8;
- Figur 10: eine Schnittansicht eines weiteren Ausführungsbeispiels einer erfindungsgemäßen Heißkammer;
- Figur 11: eine Ansicht ähnlich wie in Figur 9 für eine Variante eines Ausführungsbeispiels; und
- Figur 12: eine Teilschnittdarstellung eines weiteren Ausführungsbeispiels einer Heißkammer.

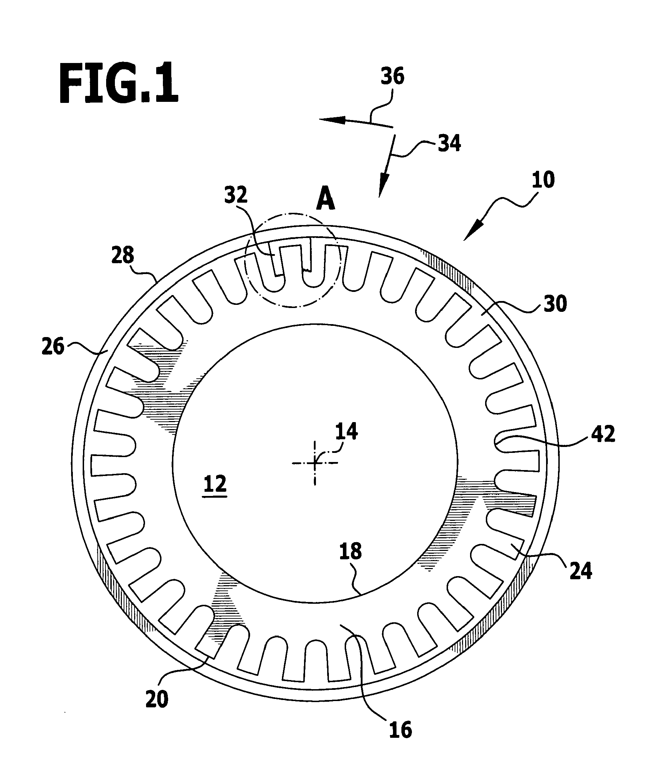

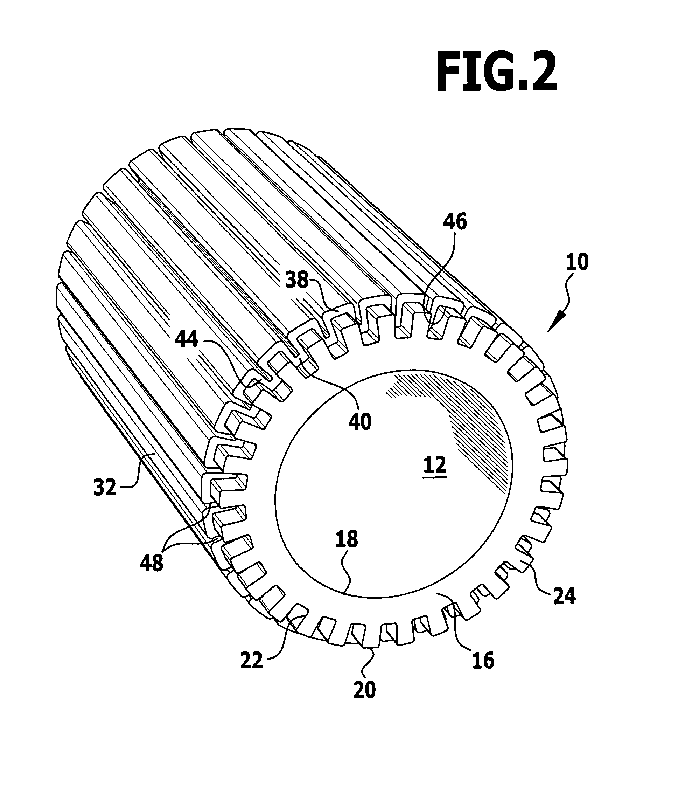

Ein erstes Ausführungsbeispiel einer Heißkammer, welches in den Figuren 1 und 2 gezeigt ist und dort mit 10 bezeichnet ist, umfasst einen Heißraum 12, welcher ein heißes Medium aufnehmen kann. Beispielsweise wird das heiße Medium in dem Heißraum 12 gespeichert; die Heißkammer 10 ist dann Teil einer Speichervorrichtung. Bei einem anderen Anwendungsbeispiel wird heißes Medium durch den Heißraum 12 für einen Wärmetauschvorgang geführt; die Heißkammer 10 ist dann Teil eines Wärmetauschers. Bei einem weiteren Anwendungsbeispiel wird das heiße Medium in dem Heißraum 12 durch Verbrennungsvorgänge erzeugt. Die Heißkammer 10 ist dann eine Brennkammer beispielsweise für ein Triebwerk wie für ein Flugkörpertriebwerk (Raketentriebwerk).

Der Heißraum 12 ist bei dem gezeigten Beispiel rotationssymmetrisch zu einer Achse 14 ausgebildet. Beispielsweise ist er zylindrisch; es sind auch andere Formen möglich wie beispielsweise konische Formen, sphärische Formen, allgemeine gekrümmte Innenkonturformen oder Mischformen. Ein Heißraum kann beispielsweise einen verengten Halsbereich aufweisen.

Der Heißraum 12 ist durch eine Heißkammerwand 16 begrenzt, welche eine zylindrische Innenkontur 18 aufweist. Eine Außenkontur 20 der Heißkammerwand 16 weist eine zylindrische Einhüllende auf, wobei Ausnehmungen 22 gebildet sind.

Zwischen benachbarten Ausnehmungen 22 sind jeweilige Materialstege 24 angeordnet, so dass die Außenkontur 20 der Heißkammerwand 16 mit sich in axialer Richtung (d. h. parallel zur Achse 14) erstreckenden Zähnen (an den Materialstegen 24) versehen ist. Im Querschnitt ist die Außenkontur 20 der Heißkammerwand mäanderförmig ausgebildet.

Die Heißkammerwand 16 ist von einer Hüllenstruktur 26 umgeben. Die Hüllenstruktur 26 ist insbesondere geschlossen und als Mantel 28 ausgebildet.

Bei einem Ausführungsbeispiel ist die Hüllenstruktur 26 ein zylindrischer Mantel 28, welcher konzentrisch zu dem Heißraum 12 angeordnet ist, d. h. eine Achse aufweist, welche mit der Achse 14 zusammenfällt.

Zwischen der Hüllenstruktur 26 und der Heißkammerwand 16 ist ein Zwischenraum 30 gebildet. In diesem Zwischenraum 30 ist eine geschlossene Schale 32 angeordnet, welche die Heißkammerwand 16 umgibt. In Figur 1 ist nur ein Teil dieser Schale 32 gezeigt; in Figur 2 ist die Hüllenstruktur 26 nicht gezeigt.

Die Schale 32 liegt an einer Innenseite der Hüllenstruktur 26 mindestens in Teilbereichen an. Ferner liegt sie an der Außenkontur 20 der Heißkammerwand 16 mindestens in Teilbereichen an (siehe unten). Sie ist dadurch sowohl mit der Heißkammerwand 16 als auch mit der Hüllenstruktur 26 verbunden und stützt sich sowohl an der Außenkontur 20 der Heißkammerwand 16 als auch an der Innenseite der Hüllenstruktur 26 ab.

Die Schale 32 ist einstückig ausgebildet und weist eine Erstreckung in der axialen Richtung parallel zur Achse 14 auf. Sie ist der Innenkontur der Hüllenstruktur 26 und der Außenkontur 20 der Heißkammerwand 16 angepasst und folgt jeweils deren Verlauf. Die Schale 32 ist so angepasst, dass sie thermische Dehnungsmöglichkeiten in einer Abstandsrichtung 34 zwischen der Hüllenstruktur 26 und der Heißkammerwand 16 aufweist und thermische Dehnungsmöglichkeiten in einer Querrichtung 36 zur Abstandsrichtung 34 aufweist.

Wenn der Heißraum 12 rotationssymmetrisch ausgebildet ist und die Hüllenstruktur 26 ebenfalls mindestens näherungsweise rotationssymmetrisch ausgebildet ist, dann ist die Abstandsrichtung 34 mindestens näherungsweise eine radiale Richtung. Die Querrichtung 36 ist dann in diesem Falle eine Umfangsrichtung.

Die Schale 32 ist mäanderförmig ausgebildet. Sie umfasst erste Querstege 38 und zweite Querstege 40, welche in der Abstandsrichtung 34 beabstandet zueinander sind und alternierend aufeinanderfolgen. Die Querstege 38 und 40 sind im wesentlichen parallel zueinander angeordnet. Die ersten Querstege 38 sind zur Kontaktierung der Innenkontur der Hüllenstruktur 26 vorgesehen. Die zweiten Querstege 40 sind zum Eintauchen in die Ausnehmungen 22 vorgesehen. Diese Ausnehmungen 22 weisen Ausnehmungsgrunde 42 auf.

Die ersten Querstege 38 sind mit benachbarten zweiten Querstegen 40 jeweils durch Verbindungsstege 44 verbunden. Diese Verbindungsstege 44 sind mindestens näherungsweise in der Abstandsrichtung 34 orientiert.

Zwischen benachbarten Verbindungsstegen 44, welche an einem ersten Quersteg 38 angeordnet sind, ist ein Freiraum 46 gebildet. Zwischen benachbarten Verbindungsstegen 44, welche an einem zweiten Quersteg 40 angeordnet sind, ist ein Freiraum 48 gebildet. Benachbarte Verbindungsstege 44, an welchen ein zweiter Quersteg 40 angeordnet ist, bilden mit dem zweiten Quersteg 40 einen Bügel oder eine Lamelle, welche in die entsprechende Ausnehmung 22 eingetaucht ist. Ein solcher Freiraum 48 bildet einen Spalt, welcher durch die Hüllenstruktur 26 begrenzt ist.

Die Schale 32 ist relativ dünn ausgebildet. Die Dicke des Materials, welches die Querstege 38, 40 und die Verbindungsstege 44 bildet, ist kleiner als der Abstand der Querstege 38 und 40 in der Abstandsrichtung 34. Ferner ist sie kleiner als der Abstand der Verbindungsstege 44, welche an einem ersten Quersteg 38 angeordnet sind.

Vorzugsweise ist die Schale 32 so an die Heißkammerwand 16 und die Hüllenstruktur 26 angepasst ausgebildet, dass zwischen der Heißkammerwand 16 und der Schale 32 Spalte 50, 52 liegen. Zwischen der Schale 32 und der Hüllenstruktur 26 liegen die Spalte 48. Insbesondere sind solche Spalte 50, 52 in axialer Richtung durchgehend ausgebildet. Über sie lässt sich über die axiale Länge Kühlmittel der Heißkammerwand 16 zuführen.

Die Spalte 48, 50, 52 lassen auch eine thermische Dehnung der Schale 32 zu, wobei durch entsprechende Auslegung dafür gesorgt ist, dass die Dehnung unterhalb der Bruchdehnung liegt. Durch die Spalte 48, 50, 52 lässt sich eine thermische Entkopplung zwischen der Heißkammerwand 16 und der Schale 32 erreichen, da Wärmebrücken vermieden sind. Diese Spalte 48, 50, 52, über welche die thermische Entkopplung erfolgt, lassen sich wiederum großflächig mit Kühlmittel umspülen.

Die Schale 32 ist vorzugsweise aus einem metallischen Material hergestellt. Beispielsweise wird eine Schale 32 durch Drahterodieren oder durch spanabhebende Materialverarbeitung hergestellt.

Bei einem Ausführungsbeispiel ist die Heißkammerwand 16 aus einem porösen faserverstärkten Material wie beispielsweise C/C-Material hergestellt. Es handelt sich dabei vorzugsweise um ein keramisches C/C-Material. Eine solche Heißkammer mit einer Heißkammerwand 16 als Innenmantel aus einem Faserkeramikmaterial ist in der WO 99/04156 A1 beschrieben, auf die ausdrücklich Bezug genommen wird.

Es ist aber auch grundsätzlich möglich, dass die Heißkammerwand 16 aus einem anderen Material wie beispielsweise einem keramischen Material hergestellt ist.

Die Hüllenstruktur 26 ist beispielsweise aus einem keramischen Material oder aus einem Faserverbundwerkstoff hergestellt. (In der WO 99/04156 A1 ist eine Hüllenstruktur beschrieben, welche dort als Außenmantel bezeichnet ist und aus einem Faserkeramikmaterial hergestellt ist.)

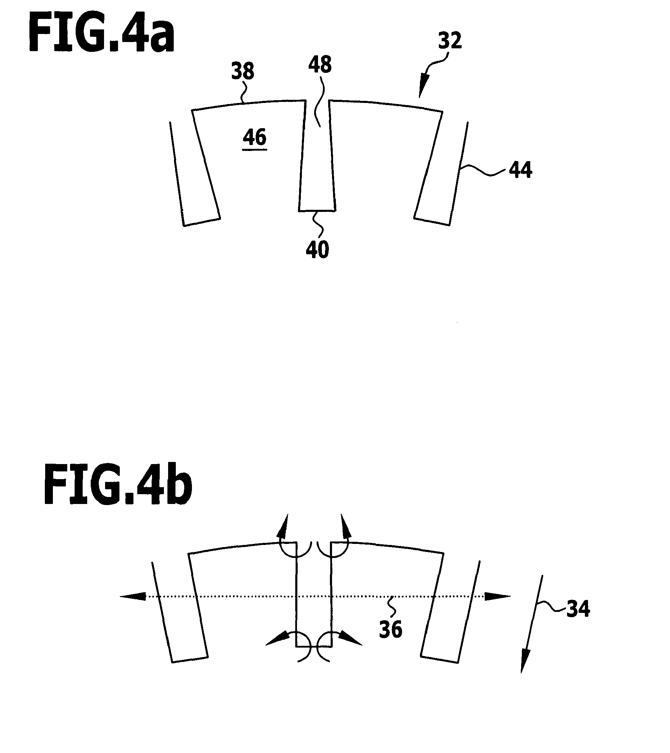

Die Schale 32 weist, wie in den Figuren 4(a) und 4(b) schematisch gezeigt, thermische Dehnungsmöglichkeiten in der Abstandsrichtung 34 und in der Querrichtung 36 auf. Eine Umfangsdehnung (Dehnung in der Querrichtung 36) wird durch die mäanderförmige Struktur der Schale 32 in eine Biegung transformiert.

Das elastische Verhalten der Schale 32 aufgrund der Dehnungsmöglichkeiten in der Abstandsrichtung 34 und der Querrichtung 36 erlaubt einen Spaltausgleich. Die Schale 32 kann in ihren Dehnungsmöglichkeiten aufgezwungenen Dehnungen der Hüllenstruktur 26 und/oder der Heißkammerwand 16 folgen.

Es ist dabei möglich, dass die Schale 32 aufgrund ihrer Eigenelastizität in der Abstandsrichtung 34 vorgespannt ist. Insbesondere kann sie radial vorgespannt sein. Die Schale 32 kann auch von innen oder von außen unter Überdruck stehen.

Durch die Heißkammerwand 16 und/oder die Hüllenstruktur 26 wird die Schale 32 abgestützt und entsprechend wird eine Weichheit der Schale 32 in Umfangsrichtung oder radialer Richtung aufgefangen.

Durch die Zusammenwirkung der Heißkammerwand 16, der Schale 32 und der Hüllenstruktur 26 lassen sich kritische Zwangsspannung oder Versagenspannungen verhindern; die Schale 32 erlaubt einen "Ausgleich" zwischen der Heißkammerwand 16 und der Hüllenstruktur 26, auch wenn die entsprechenden Materialien stark unterschiedliche thermische Ausdehnungskoeffizienten aufweisen.

Die Schale 32 ist insbesondere fluiddicht ausgebildet. Beispielsweise ist sie als Diffusionssperre ausgebildet. Dadurch kann ein Medium, welches über die Spalte 50, 52 dem Heißraum 12 zugeführt wird bzw. durch eine poröse Heißkammerwand 16 austritt, nicht durch die Schale 32 gelangen.

Durch die Schale 32 wird eine Verbindung zwischen der Hüllenstruktur 26 und der Heißkammerwand 16 hergestellt, wobei gleichzeitig Spalte 48, 50, 52 bereitgestellt sind, durch die ein Medium wie beispielsweise Kühlmittel durchgeführt werden kann.

Mittels der Schale 32 lassen sich thermisch interferierende und/oder mechanisch interferierende Lasten an der Heißkammer 10 entkoppeln. Die Schale 32 selber kann Teillasten tragen.

Durch das mäanderförmige Querschnittsprofil der Schale 32 wird das Beulrisiko für diese Schale 32 reduziert. Die Beulstabilität der Schale 32 kann durch Druckbeaufschlagung von innen oder von außen noch erhöht werden, da sich die Schale 32 an der Heißkammerwand 16 und/oder der Hüllenstruktur 26 abstützen kann.

Die Heißkammer 10 wird beispielsweise so hergestellt, dass auf die Heißkammerwand 16 die Schale 32 aufgeschoben wird. Die Schale 32 wird dann in der Abstandsrichtung 34 zusammengedrückt (gestaucht) und festgehalten. Dies ist aufgrund der Elastizität der Schale 32 in der Abstandsrichtung 34 möglich. Danach kann die Hüllenstruktur 26 beispielsweise als Mantel 28 aufgeschoben werden.

Es ist auch möglich, dass die erfindungsgemäße Lösung bei einer Mehrfachwandstruktur eingesetzt wird, d. h. dass eine Mehrzahl von Schalen entsprechend der Schale 32 vorgesehen sind, wobei eine entsprechende Schale zwischen einer ersten Wand und einer zweiten Wand, zwischen der zweiten Wand und einer dritten Wand usw. angeordnet sein kann.

Das erste Ausführungsbeispiel wurde im Zusammenhang mit einem zylindrischen Heißraum 12 beschrieben. Es ist beispielsweise auch möglich, dass der Heißraum ein Ringraum ist und eine Schale einer Innenseite einer entsprechenden Heißkammerwand zugewandt angeordnet ist und die Schale eine innere Hüllenstruktur umgibt.

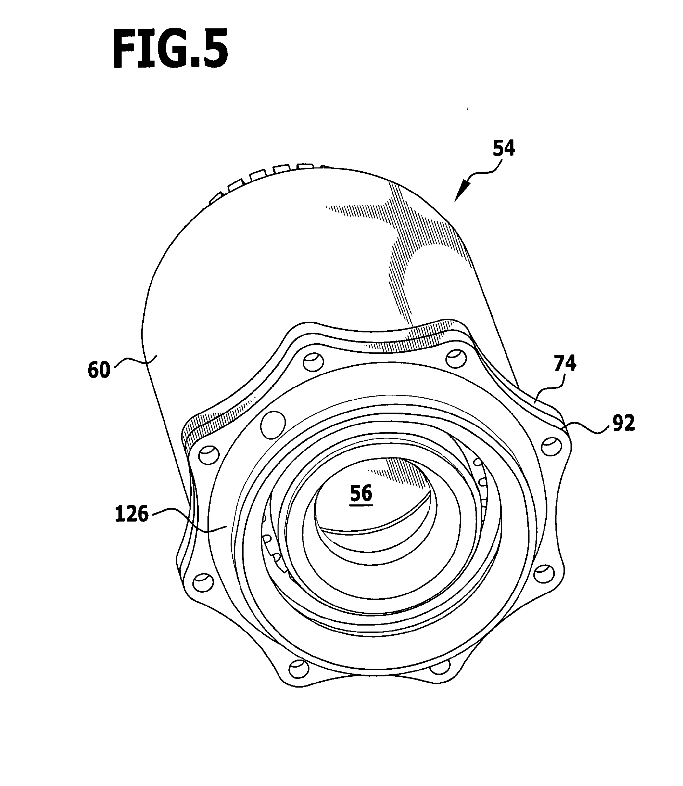

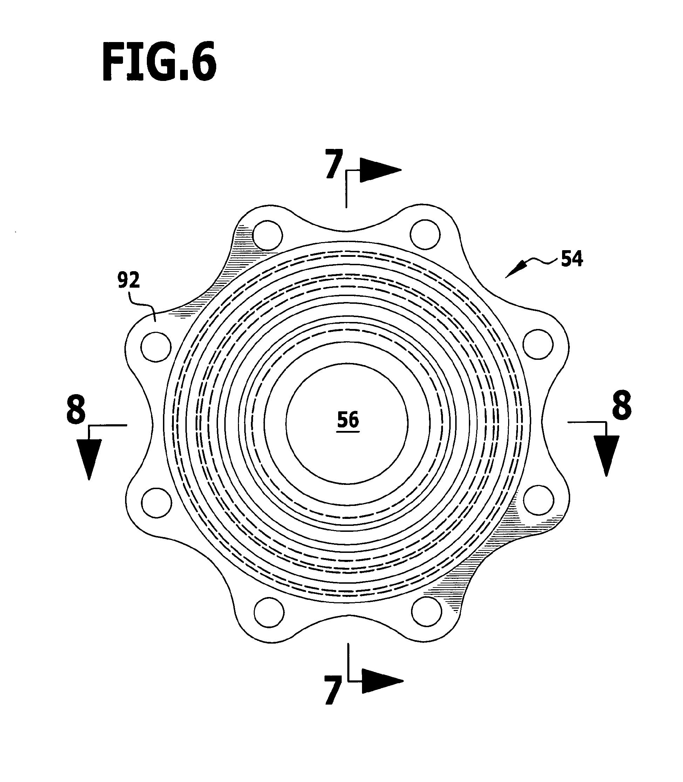

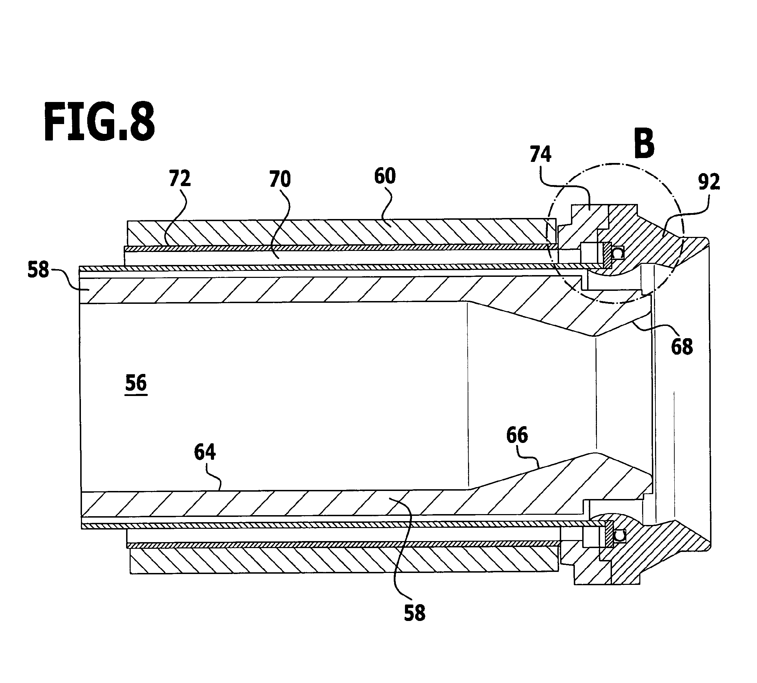

Bei einem zweiten Ausführungsbeispiel einer Heißkammer, welches in den Figuren 5 bis 9 gezeigt und dort mit 54 bezeichnet ist, sind ein Heißraum 56, eine Heißkammerwand 58 und ein Mantel 60 (Außenmantel) vorgesehen, welche grundsätzlich gleich ausgebildet sind wie oben anhand des ersten Ausführungsbeispiels beschrieben.

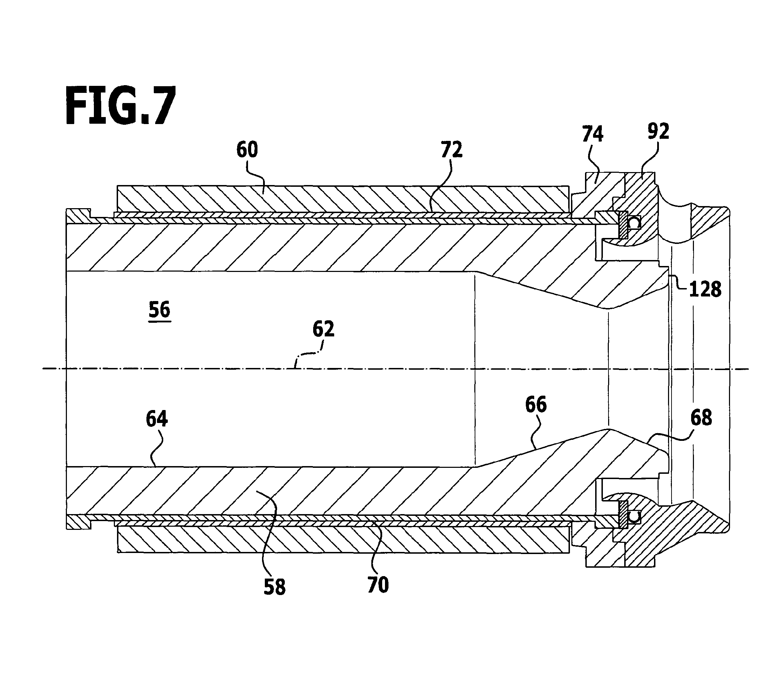

Die Heißkammerwand erstreckt sich längs einer Achse 62 (Figur 7). Der Heißraum 56 weist einen zylindrischen Abschnitt 64 und einen sich daran anschließenden (hohl-)kegelstumpfförmigen Abschnitt 66 auf. Eine gedachte Kegelspitze des kegelstumpfförmigen Abschnitts 66 liegt auf der Achse 62 außerhalb des zylindrischen Bereichs 64. Der kegelstumpfförmige Abschnitt 66 verengt sich in Richtung von dem zylindrischen Abschnitt 64 weg. An den kegelstumpfförmigen Abschnitt 66 schließt sich ein weiterer kegelstumpfförmiger Abschnitt 68 an, welcher sich von dem zylindrischen Abschnitt weg erweitert. Eine gedachte Kegelspitze des kegelstumpfförmigen Abschnitts 66 liegt auf der Achse 62 im Bereich des kegelstumpfförmigen Abschnitts 66.

Zwischen der Heißkammerwand 58 und dem Mantel 60 ist eine Schale 70 angeordnet, welche einen mäanderförmigen Querschnitt aufweist. Die Schale 70 ist grundsätzlich gleich ausgebildet wie die Schale 32 und erfüllt die gleichen Funktionen.

Zwischen der Schale 70 und einer Innenseite des Mantels 60 kann eine Schutzlage 72 wie beispielsweise eine PTFE-Schutzschicht angeordnet sein.

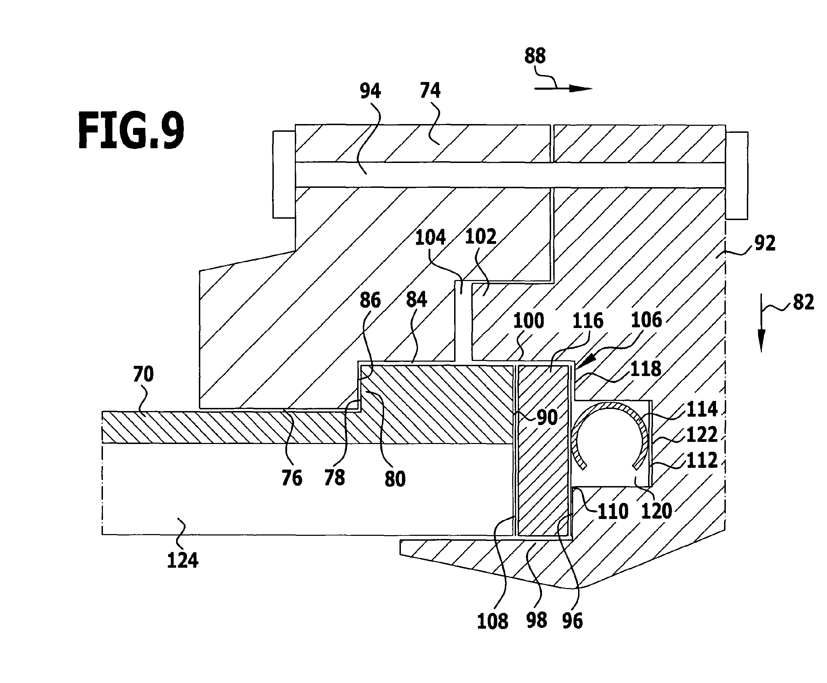

Auf der Schale 70 ist ein Halteflansch 74 angeordnet, welcher beispielsweise in Form eines Klemmrings ausgebildet ist (Figur 9). Insbesondere weist der Halteflansch 74 einen Innenraum 76 auf, mittels welchem er auf die Schale 70 aufgesetzt ist.

An der Schale 70 ist eine Stufe 78 mit einer Sperrfläche 80 gebildet, welche in der Abstandsrichtung 82 zwischen dem Mantel 60 und der Heißkammerwand 58 orientiert ist. Der Halteflansch 74 weist an dem Innenraum 76 eine angepasste Ausnehmung 84 mit einer Sperrfläche 86 auf, welche an der Sperrfläche 80 der Schale 70 anstoßen kann. Durch die Sperrflächen 80, 86 wird eine axiale Verschieblichkeit des Halteflanschs 74 in einer axialen Richtung 88 gesperrt. Bei einer elastischen Ausbildung der Schale 70 kann diese mit ihrer Stufe 78 in die Ausnehmung 84 einrasten.

An einer Stirnseite 90 der Heißkammerwand 58 ist ein Stirnflansch 92 angeordnet, welcher über entsprechende Verspannungsmittel 94 wie beispielsweise Schrauben oder Bolzen mit dem Halteflansch 74 verspannt ist. Der Stirnflansch 92 wird durch die Verspannung an die Stirnseite 90 im Bereich des Mantels 60 gedrückt. Er weist dazu eine entsprechende Anlagefläche 96 auf.

Der Stirnflansch 92 weist eine erste ringförmige Haltenase 98 auf, welche von innen an der Schale 70 anliegt und diese radial festlegt. Ferner weist er eine zweite ringförmige Haltenase 100 auf, welche von außen an der Schale 70 anliegt und diese entsprechend radial fixiert.

Es kann vorgesehen sein, dass der Stirnflansch einen Ringsteg 102 aufweist, welcher in eine entsprechende Ringnut 104 des Halteflanschs 74 eingetaucht ist. Dadurch lässt sich ein Dichtungsbereich 106 zwischen dem Stirnflansch 92 und dem Mantel 60 überdecken.

Zur Abdichtung zwischen dem Mantel 60 und dem Stirnflansch 92 sind Dichtungen 108, 110, 112, 114 vorgesehen.

Zwischen der ersten Haltenase 98 und der zweiten Haltenase 200 ist ein Ringelement 116 positioniert, welches die Funktion einer Unterlagscheibe aufweist. Zwischen dem Ringelement 116 und der Stirnseite 90 an dem Mantel 60 ist eine Ringdichtung 108 insbesondere in Form einer Foliendichtung angeordnet. Zwischen dem Ringelement 116 und einer entsprechenden Anlagefläche 118 des Stirnflanschs 92 ist eine weitere Dichtung 110 insbesondere in Form einer Ringdichtung und vorzugsweise eine Foiiendichtung angeordnet.

Im Bereich der Anlagefläche 118 weist der Stirnflansch 92 eine Ausnehmung 120 auf, in der eine druckbeaufschlagbare Dichtung 114 sitzt. Diese drückt auf das Ringelement 116 und damit dieses gegen die Dichtung 108.

Zwischen der Dichtung 112 und einer entsprechenden Wand 122 der Ausnehmung 120 sitzt eine Dichtung 112. Bei dieser Dichtung 112 handelt es sich insbesondere um eine Ringdichtung beispielsweise in Folienform.

Durch die Verspannung des Stirnflansches 92 mit dem Halteflansch 74 wird der Halteflansch 74 an der Heißkammer 54 gehalten. Die Dichtungen 108, 110 und 112 werden durch diese axiale Verspannung ebenfalls gegen die Stirnseite 90 gepresst. Die Dichtung 114, welche insbesondere als Federdichtring ausgebildet ist, kann während des Betriebs der Heißkammer 54 auftretende axiale Spalterweiterungen kompensieren. Solche axialen Spalterweiterungen können beispielsweise durch mechanische Verzerrungen auftreten. Die Elastizität der Dichtung 114 bietet eine Verformungsreserve.

Es ist insbesondere vorgesehen, dass die Dichtung 114 so bezüglich eines oder mehrerer Kühlmittelkanäle 124 angeordnet ist, dass diese mit Kühlmittelreservoirdruck beaufschlagt ist, wenn die Dichtungen 108, 110 Kühlmittel in die Ausnehmung 120 lassen. Dadurch wird für eine erhöhte Dichtungswirkung gesorgt.

Der Halteflansch 74 und der Stirnflansch 92 sind bevorzugt aus einem metallischen Material hergestellt.

Es kann vorgesehen sein, dass ein Anschlusselement 126 wie beispielsweise eine keramische Düse an dem Stirnflansch 92 angeordnet ist. Dazu ist eine entsprechende Aufnahme 128 an dem Stirnflansch 92 ausgebildet.

Stirnseitig lässt sich die Heißkammerwand durch axial vorgespannte Dichtungen 108, 110, 112, 114, welche auch federnd sein können (Dichtung 114) zuverlässig abdichten. Beispielsweise werden Umfangsdehnungen durch thermische Wechselzyklen, welche sich in Umfangsdehnungen der Dichtung 108 äußern, in Biegedehnungen der Schale 70 transformiert. Dadurch wird das Risiko des Versagens der Dichtung an dem Übergangsbereich zu der Schale 70 stark reduziert.

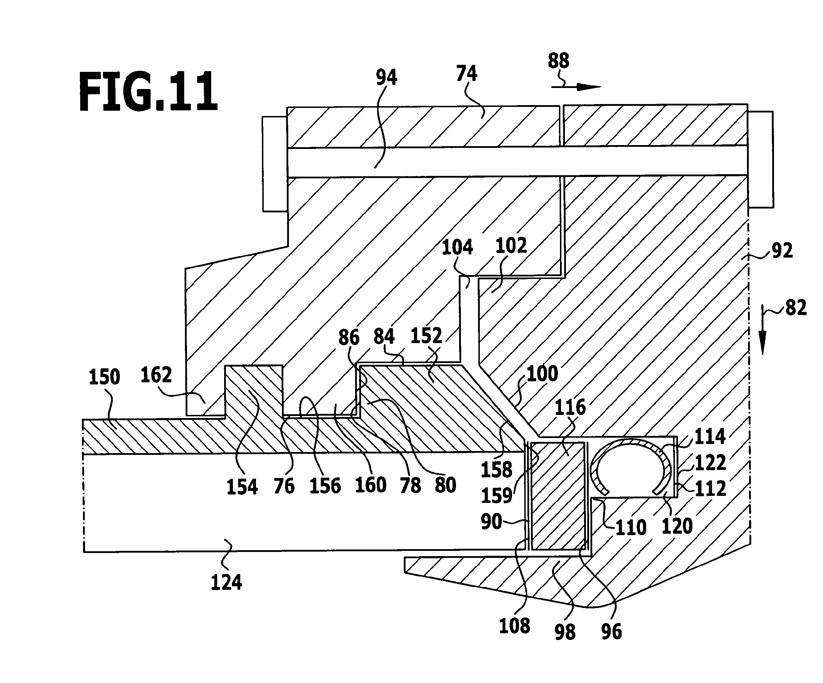

Bei einer Variante eines Ausführungsbeispiels, welches in Figur 11 gezeigt ist, weist eine Schale 150 an ihrem Ende einen ersten Flansch 152 auf. Dieser erste Flansch bildet eine Erhöhung über der restlichen Oberfläche der Schale 150. Beabstandet zu diesem ersten Flansch 152 weist die Schale 150 einen zweiten Flansch 154 auf. Zwischen dem ersten Flansch 152 und dem zweiten Flansch 154 ist eine Ausnehmung 156 gebildet.

Die Schale 150 ist ansonsten gleich ausgebildet wie die Schale 70. Weiterhin werden für gleiche Elemente die gleichen Bezugszeichen wie in Figur 9 verwendet.

Der erste Flansch 152 weist eine Abschrägung 158 zu dem Ende der Schale 150 hin auf. Ein Flansch 152 mit Abschrägung 158 ist dabei an beiden Enden der Schale 150 angeordnet. (In Figur 11 ist nur der Bereich eines ersten Endes gezeigt.) Durch Ausübung einer axialen Kraft auf die ersten Flansche 152 lässt sich eine radiale Kraft zur Stauchung der Schale 150 erzeugen. Diese Stauchbarkeit erleichtert die Montage der entsprechenden Heißkammer.

Die Abschrägung 158 geht in eine Stufe 159 über. An dieser Stufe 159 ist der Durchmesser der Schale 150 kleiner als außerhalb der Flansche 152 und 154. Dadurch ist die Montierbarkeit der Schale 150 erleichtert.

In die Ausnehmung 156 kann ein entsprechendes Element 160 des Halteflanschs 74 eintauchen und an einer entsprechenden Seite des ersten Flansches 152 und/oder des zweiten Flansches 154 anliegen. Ferner kann ein Element 162 des Halteflanschs 74 an dem zweiten Flansch 154 anliegen. Dadurch wird insgesamt die Stabilität erhöht.

Der erste Flansch 152 und der zweite Flansch 154 sind dabei bezogen auf die Umfangsrichtung der Schale 150 durch Ausnehmungen unterbrochen, welche durch die Bügelausbildung bestimmt sind.

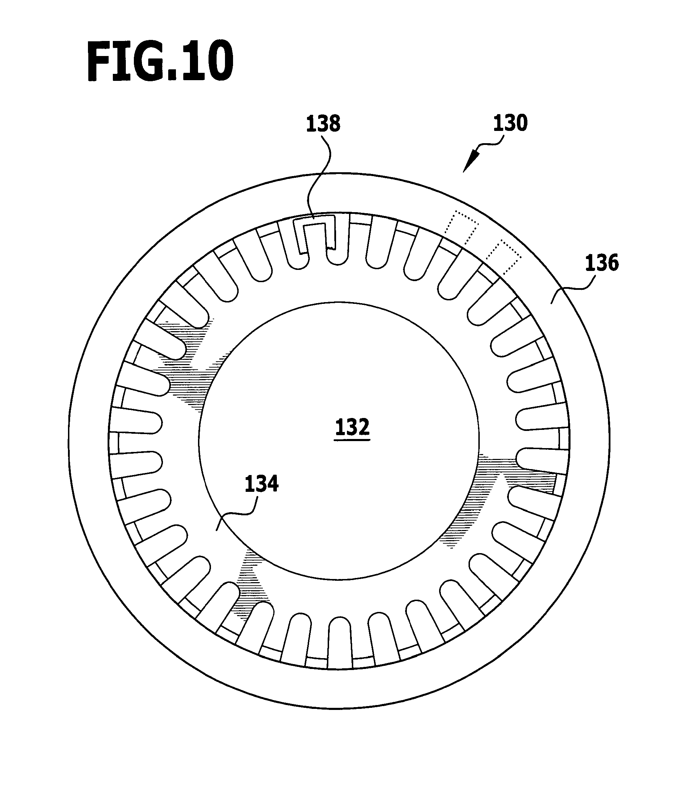

Bei einem weiteren Ausführungsbeispiel einer Heißkammer, welches in Figur 10 gezeigt und dort mit 130 bezeichnet ist, ist ein Heißraum 132 vorgesehen, welcher konisch ausgebildet ist. Dieser Heißraum 132 hat insbesondere die Gestalt eines Kegelstumpfes. Er ist durch eine Heißkammerwand 134 gebildet, welche eine konische Innenkontur aufweist. Auch eine Einhüllende der Außenkontur der Heißkammerwand 134 ist konisch ausgebildet. Ferner ist eine Hüllenstruktur 136 vorgesehen, welche konisch ausgebildet ist.

Zwischen der Hüllenstruktur 136 und einer Außenseite der Heißkammerwand 134 ist, ähnlich wie anhand der Ausführungsbeispiele 10 und 54 beschrieben, eine Schale 138 aus einem elastischen Material angeordnet. Insbesondere ist die Schale 138 mäanderförmig ausgebildet. (In Figur 10 ist nur ein Teilbereich dieser Schale gezeigt.) Auch die Schale 138 weist eine Kontur auf, deren Einhüllenden kegelförmig sind.

Auch bei dieser geometrischen Ausbildung lassen sich die erfindungsgemäßen Vorteile der Schale 138 erreichen.

Grundsätzlich können die Heißkammerwand 134 und die Hüllenstruktur 136 beliebige geometrische Formen aufweisen.

Mit der erfindungsgemäßen Lösung lässt sich eine zuverlässige und betriebssichere Verbindung von Bauteilen, welche aus unterschiedlichen Materialien hergestellt sind, erreichen. Insbesondere lassen sich Bauteile aus Verbundwerkstoffen und Bauteile aus Metallen miteinander verbinden. Eine Dichtigkeit lässt sich auf einfache Weise erreichen.

Es lässt sich auch eine Heißkammerwand aus einem porösen Material dehnkompatibel und verdrehsicher einbinden. Beispielsweise kann eine entsprechende Heißkammer 10, 54 als effusionsgekühlte oder transpirationsgekühlte Brennkammer verwendet werden.

Über die Schale 32 bzw. 70 können Lastpfade bereitgestellt werden, über die sich die Schublast abtragen lässt. Eine Kühlmittelversorgung lässt sich über entsprechende Spalte 50, 52 gewährleisten.

Die Montage lässt sich auf einfache Weise durchführen. Beispielsweise werden die Heißkammerwand 16, die Schale 32 und der Mantel 28 bei der Montage lösbar ineinandergeschoben und es erfolgt dann eine Fixierung durch Flansche wie den Halteflansch 74 und den Stirnflansch 92. Dadurch können die entsprechenden Bauteile separat hergestellt werden. Bei Beschädigung eines Bauteils muss nicht die gesamte Heißkammer entsorgt werden, sondern das entsprechende Bauteil kann ausgetauscht werden.

Durch die Schale 32, 72 lässt sich die Heißkammerwand 16 nach innen und/oder nach außen einfassen. Dadurch lässt sich die Heißkammerwand 16 zentrieren, wobei eine Dehnung erlaubt ist. Die Schale 32, 70 stellt eine Art eines "flexiblen Käfigs" für die Heißkammerwand 16, 58 dar, wobei eine Fluiddichtigkeit bzw. Diffusionssperre bereitgestellt ist.

Es lässt sich dabei das Entstehen von Wärmebrücken nach außen bzw. nach innen verhindern. Durch die Spalte 50, 52 ist die Schale 32, 70 gewissermaßen schwimmend an der Heißkammerwand 16 gelagert.

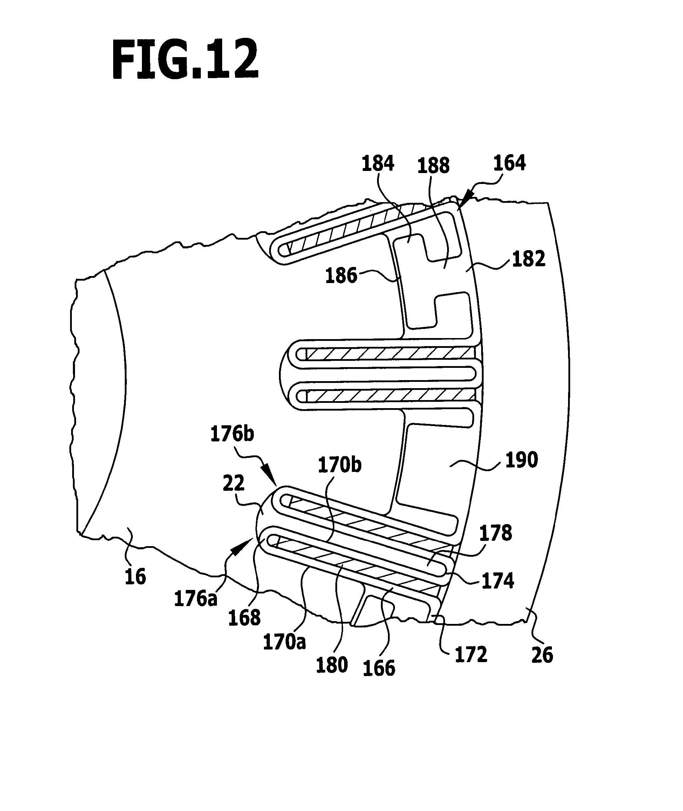

Bei einem weiteren Ausführungsbeispiel einer erfindungsgemäßen Heißkammer, welches in Figur 12 schematisch in Teilschnittdarstellung gezeigt ist, ist die Heißkammerwand grundsätzlich gleich ausgebildet wie anhand der Heißkammer 10 beschrieben. Es wird deshalb hierfür das gleiche Bezugszeichen verwendet. Die Hüllenstruktur ist ebenfalls grundsätzlich gleich ausgebildet, so dass hier ebenfalls das gleiche Bezugszeichen verwendet wird.

Es ist eine Schale 164 vorgesehen, weiche Bügel oder Lamellen 166 aufweist. Diese Bügel 166 sind in die Ausnehmungen 22 eingetaucht. Ein Bügel 166 ist dabei durch einen zweiten Quersteg 168 gebildet, an welchem jeweils ein Verbindungssteg 170a und 170b angeordnet ist. Die Verbindungsstege 170a, 170b sind beabstandet zueinander und mindestens näherungsweise parallel zueinander ausgerichtet. Der Verbindungssteg 170a ist mit einem ersten Quersteg 172 verbunden. Der erste Quersteg 172 verbindet benachbarte Bügel 166 in benachbarten Ausnehmungen.

Der Verbindungssteg 170b ist mit einem dritten Quersteg 174 verbunden. Der dritte Quersteg 174 verbindet benachbarte Bügel 166 innerhalb der Ausnehmung 22. In der Ausnehmung 22 ist dadurch ein erster Bügel 176a und ein zweiter Bügel 176b angeordnet.

Es ist dabei grundsätzlich möglich, dass innerhalb einer Ausnehmung 22 auch mehr als zwei Bügel angeordnet sind, das heißt mehr als zwei Bügel teilweise in die Ausnehmung 22 eintauchen.

Der erste Bügel 176a ist mit dem zweiten Bügel eines benachbarten Bügelpaars verbunden. Der zweite Bügel 176b ist mit dem ersten Bügel des benachbarten Bügelpaars über einen ersten Quersteg 172 verbunden.

Zwischen dem ersten Bügel 176a und dem zweiten Bügel 176b ist ein Freiraum 178 gebildet.

Zwischen den jeweiligen Verbindungsstegen 170a und 170b sowohl des ersten Bügels 176a als auch des zweiten Bügels 176b ist jeweils ein Füllelement 180 angeordnet. Ein solches Füllelement 180 ist beispielsweise als Plättchen ausgebildet. Beispielsweise ist es aus einem metallischen Material hergestellt.

Das Füllelement 180 erlaubt eine Kraftabstützung der Verbindungsstege 170a, 170b, aneinander. Dadurch wird die Stabilität der Schale 164 erhöht.

Die Füllelemente 180 werden nach der Positionierung der Schale 164 an der Heißkammerwand 16 eingeschoben.

An dem ersten Quersteg 172 der Schale 164 ist zwischen benachbarten Bügelpaaren jeweils ein Stützelement 182 angeordnet. Ein solches Stützelement 182 ist fest an der Schale angeordnet. Es weist einen Stützfuß 184 auf, welcher im Normalbetrieb beabstandet zu der Heißkammerwand 16 ist, das heißt es ist ein Spalt 186 zwischen dem Stützfuß 184 und der Heißkammerwand 16 gebildet.

Im Überlastfall bei starker Druckausübung und/oder bei äußerem Verformungszwang auf die Heißkammerwand 16 kann diese den Stützfuß 184 berühren. Dadurch wird ein Kraftpfad zu der Hüllenstruktur 26 bereitgestellt und es können Kräfte über die Schale 164 zu der Hüllenstruktur 26 abgeleitet werden.

Bei dem in Figur 12 gezeigten Ausführungsbeispiel weist der Stützfuß 184 eine größere Breite als ein Stegelement 188 auf, mittels welchem der Stützfuß 184 an der Schale 164 gehalten ist.

Es ist auch möglich, dass Stützelemente 190 vorgesehen sind, bei welchen der Stützfuß die gleiche Breite wie das Stegelement aufweist und der Stützfuß insbesondere von dem Stegelement nicht unterscheidbar ist.

Es ist beispielsweise auch möglich, dass ein solches Stützelement 190 zur Fixierung einer Sensoreinrichtung zur Untersuchung des Heißraums der entsprechenden Heißkammer dient.

## Patentansprüche

1. Heißkammer, umfassend mindestens einen Heißraum (12; 56), mindestens eine Heißkammerwand (16; 58), welche den Heißraum (12; 56) begrenzt, und mindestens eine Hüllenstruktur (26; 60), welche eine Heißkammerwand (16; 58) umgibt und/oder von einer Heißkammerwand umgeben ist,
**dadurch gekennzeichnet , dass** zwischen der Heißkammerwand (16; 58) und der Hüllenstruktur (26; 60) eine Schale (32; 70) angeordnet ist, welche mindestens in Teilbereichen an der Heißkammerwand (16; 58) und an der Hüllenstruktur (26; 60) anliegt, und dass die Schale (32; 70) so ausgebildet ist, dass sie in einer Abstandsrichtung (34) zwischen der Heißkammerwand (16; 58) und der Hüllenstruktur (26; 60) und in einer Querrichtung (36) zu dieser Abstandsrichtung (34) dehnbar ist.

2. Heißkammer nach Anspruch 1, **dadurch gekennzeichnet, dass** die Schale (32; 70) aufgrund thermischer und/oder mechanischer Belastung dehnbar ist.

3. Heißkammer nach Anspruch 1 oder 2, **dadurch gekennzeichnet, dass** die Schale (32; 70) elastisch ausgebildet ist.

4. Heißkammer nach einem der vorangehenden Ansprüche, **dadurch gekennzeichnet, dass** die Schale (32; 70) die Heißkammerwand (16; 58) umgibt oder von dieser umgeben ist.

5. Heißkammer nach einem der vorangehenden Ansprüche, **dadurch gekennzeichnet, dass** die Schale (32; 70) umfänglich geschlossen ist.

6. Heißkammer nach einem der vorangehenden Ansprüche, **dadurch gekennzeichnet, dass** die Schale (32; 70) aus einem metallischen Material hergestellt ist.

7. Heißkammer nach einem der vorangehenden Ansprüche, **dadurch gekennzeichnet, dass** die Schale (32; 70) erste Querstege (38) und zweite Querstege (40) aufweist, welche in der Abstandsrichtung (34) zwischen der Heißkammerwand (16; 58) und der Hüllenstruktur (26; 60) beabstandet sind und welche quer zu dieser Abstandsrichtung (34) orientiert sind.

8. Heißkammer nach Anspruch 7, **dadurch gekennzeichnet, dass** ein erster Quersteg (38) und ein benachbarter zweiter Quersteg (40) aufgrund thermischer Dehnung relativ zueinander in der Abstandsrichtung (34) und quer zur Abstandsrichtung (34) beweglich sind.

9. Heißkammer nach Anspruch 7 oder 8, **dadurch gekennzeichnet, dass** benachbarte erste Querstege (38) und zweite Querstege (40) in der Querrichtung (36) zur Abstandsrichtung (34) versetzt zueinander sind.

10. Heißkammer nach einem der Ansprüche 7 bis 9, **dadurch gekennzeichnet, dass** benachbarte erste Querstege (38) und zweite Querstege (40) über jeweilige Verbindungsstege (44) verbunden sind.

11. Heißkammer nach Anspruch 10, **dadurch gekennzeichnet, dass** zwischen benachbarten Verbindungsstegen (44), welche an einem ersten Quersteg (38) angeordnet sind, ein Freiraum (46) gebildet ist.

12. Heißkammer nach Anspruch 10 oder 11, **dadurch gekennzeichnet, dass** zwischen benachbarten Verbindungsstegen (44), welche an einem zweiten Quersteg (40) angeordnet sind, ein Freiraum (48) gebildet ist.

13. Heißkammer nach einem der Ansprüche 9 bis 12, **dadurch gekennzeichnet, dass** ein Verbindungssteg (44) mindestens näherungsweise in der Abstandsrichtung (34) zwischen der Heißkammerwand (16; 58) und der Hüllenstruktur (26; 60) orientiert ist.

14. Heißkammer nach einem der Ansprüche 7 bis 13, **dadurch gekennzeichnet, dass** die Dicke der ersten Querstege (38) und der zweiten Querstege (40) jeweils kleiner ist als deren Abstand in der Abstandsrichtung (34).

15. Heißkammer nach einem der Ansprüche 10 bis 14, **dadurch gekennzeichnet, dass** die Dicke der Verbindungsstege (44) kleiner ist als der Abstand benachbarter Verbindungsstege (44).

16. Heißkammer nach einem der vorangehenden Ansprüche, **dadurch gekennzeichnet, dass** die Schale (32; 70) mäanderförmig ausgebildet ist.

17. Heißkammer nach einem der vorangehenden Ansprüche, **dadurch gekennzeichnet, dass** die Schale (32; 70) fluiddicht ausgebildet ist.

18. Heißkammer nach einem der vorangehenden Ansprüche, **dadurch gekennzeichnet, dass** die Schale (32; 70) als Diffusionsbarriere zwischen Heißkammerwand (16; 58) und Hüllenstruktur (26; 60) ausgebildet ist.

19. Heißkammer nach einem der vorangehenden Ansprüche, **dadurch gekennzeichnet, dass** zwischen der Schale (32; 70) und der Heißkammerwand (16; 58) und/oder der Hüllenstruktur (26; 60) Spalte (50, 52; 48) gebildet sind.

20. Heißkammer nach Anspruch 19, **dadurch gekennzeichnet, dass** in axialer Richtung durchgehende Spalte (50, 52) zur Kühlmittelbeaufschlagung der Heißkammerwand (16; 58) gebildet sind.

21. Heißkammer nach Anspruch 19 oder 20, **dadurch gekennzeichnet, dass** Spalte (48; 50; 52) zur thermischen Entkopplung von Schale (32; 70) und Heißkammerwand (16; 58) und/oder Hüllenstruktur (26; 60) gebildet sind.

22. Heißkammer nach einem der vorangehenden Ansprüche, **dadurch gekennzeichnet, dass** sich die Schale (32; 70) über die axiale Länge der Heißkammerwand (16; 58) erstreckt.

23. Heißkammer nach einem der vorangehenden Ansprüche, **dadurch gekennzeichnet, dass** die Schale (32; 70) der Kontur der Heißkammerwand (16; 58) folgt.

24. Heißkammer nach einem der vorangehenden Ansprüche, **dadurch gekennzeichnet, dass** die Heißkammerwand (16; 58) porös ausgebildet ist.

25. Heißkammer nach einem der vorangehenden Ansprüche, **dadurch gekennzeichnet, dass** die Heißkammerwand (16; 58) der Hüllenstruktur (26; 60) zugewandt beabstandete Ausnehmungen (22) aufweist, in welche jeweils ein oder mehrere zweite Querstege (40) der Schale (32; 70) eingetaucht sind.

26. Heißkammer nach Anspruch 25, **dadurch gekennzeichnet, dass** mindestens zwei Verbindungsstege (44) der Schale (32; 70) in eine zugeordnete Ausnehmung (22) mindestens teilweise eingetaucht sind.

27. Heißkammer nach Anspruch 25 oder 26, **dadurch gekennzeichnet, dass** in eine zugeordnete Ausnehmung (22) ein oder mehrere Bügel (176a; 176b) der Schale (164) mindestens teilweise eingetaucht sind.

28. Heißkammer nach Anspruch 27, **dadurch gekennzeichnet, dass** ein Bügel (176a; 176b) durch einen zweiten Quersteg (168) und an dem zweiten Quersteg (168) beabstandet angeordnete Verbindungsstege (170a, 170b) zu einem ersten Quersteg (172) oder dritten Quersteg (174) gebildet ist.

29. Heißkammer nach Anspruch 27 oder 28, **dadurch gekennzeichnet, dass** in eine zugeordnete Ausnehmung (22) mindestens ein erster Bügel (176a) und ein beabstandeter zweiter Bügel (176b) mindestens teilweise eingetaucht sind.

30. Heißkammer nach Anspruch 29, **dadurch gekennzeichnet, dass** zwischen dem ersten Bügel (176a) und dem zweiten Bügel (176b) ein Freiraum (178) liegt.

31. Heißkammer nach Anspruch 29 oder 30, **dadurch gekennzeichnet, dass** zwischen benachbarten Verbindungsstegen (170a, 170b) des ersten Bügels (176a) und/oder des zweiten Bügels (176b) mindestens ein Füllelement (180) angeordnet ist.

32. Heißkammer nach einem der vorangehenden Ansprüche, **dadurch gekennzeichnet, dass** die Heißkammerwand (16; 58) der Hüllenstruktur (26; 60) zugewandt eine mäanderförmige Außenkontur (20) aufweist.

33. Heißkammer nach einem der vorangehenden Ansprüche, **dadurch gekennzeichnet, dass** die Heißkammerwand (16; 58) aus einem faserverstärkten Material hergestellt ist.

34. Heißkammer nach Anspruch 33, **dadurch gekennzeichnet, dass** die Heißkammerwand (16; 58) aus C/C hergestellt ist.

35. Heißkammer nach einem der vorangehenden Ansprüche, **dadurch gekennzeichnet, dass** die Hüllenstruktur (26; 60) aus einem metallischen Material hergestellt ist.

36. Heißkammer nach einem der Ansprüche 1 bis 34, **dadurch gekennzeichnet, dass** die Hüllenstruktur (26; 60) aus einem Faserverbundwerkstoff hergestellt ist.

37. Heißkammer nach einem der vorangehenden Ansprüche, **dadurch gekennzeichnet, dass** die Hüllenstruktur als Mantel (28; 60) ausgebildet ist.

38. Heißkammer nach einem der vorangehenden Ansprüche, **dadurch gekennzeichnet, dass** mindestens ein Halteflansch (74) und mindestens ein Stirnflansch (92) vorgesehen sind, welche miteinander fixiert sind.

39. Heißkammer nach Anspruch 38, **dadurch gekennzeichnet, dass** der mindestens eine Halteflansch (74) so ausgebildet ist, dass er in axialer Richtung zu einer Stirnseite (90) der Heißkammer an der Schale (70) anliegt.

40. Heißkammer nach Anspruch 38 oder 39, **dadurch gekennzeichnet, dass** der mindestens eine Halteflansch (74) an der Schale (70) angeordnet ist.

41. Heißkammer nach Anspruch 40, **dadurch gekennzeichnet, dass** der mindestens eine Halteflansch (74) die Schale (70) umgibt.

42. Heißkammer nach einem der Ansprüche 38 bis 41, **dadurch gekennzeichnet, dass** der mindestens eine Stirnflansch (92) an einer Stirnseite (90) der Heißkammer anliegt.

43. Heißkammer nach einem der Ansprüche 38 bis 42, **dadurch gekennzeichnet, dass** der mindestens eine Halteflansch (74), die Schale (70) und der mindestens eine Stirnflansch (92) axial miteinander verspannt sind.

44. Heißkammer nach einem der Ansprüche 38 bis 43, **dadurch gekennzeichnet, dass** zwischen einer Stirnseite (90) der Schale (70) und dem mindestens einen Stirnflansch (94) mindestens eine Dichtung (108, 110, 112, 114) angeordnet ist.

45. Heißkammer nach Anspruch 44, **dadurch gekennzeichnet, dass** die mindestens eine Dichtung (108, 110, 112, 114) unter axialer Spannung steht.

46. Heißkammer nach Anspruch 44 oder 45, **dadurch gekennzeichnet, dass** zwischen dem mindestens einen Stirnflansch (94) und der Schale (70) mindestens eine Foliendichtung (108, 110) angeordnet ist.

47. Heißkammer nach einem der Ansprüche 44 bis 46, **dadurch gekennzeichnet, dass** mindestens eine Dichtung (114) vorgesehen ist, welche vorgespannt ist.

48. Heißkammer nach Anspruch 47, **dadurch gekennzeichnet, dass** die Dichtung (114) durch einen Kühlmittelreservoirdruck beaufschlagbar ist.

49. Heißkammer nach einem der Ansprüche 38 bis 48, **dadurch gekennzeichnet, dass** der mindestens eine Stirnflansch (94) mindestens eine Haltenase (98; 100) aufweist, durch welche die Beweglichkeit der Schale (70) in der Abstandsrichtung (82) zwischen der Hüllenstruktur (60) und der Heißkammerwand (58) gesperrt ist.

50. Heißkammer nach einem der Ansprüche 38 bis 49, **dadurch gekennzeichnet, dass** durch den mindestens einen Stirnflansch (94) eine Aufnahme (128) für ein Anschlusselement (126) gebildet ist oder dass ein Anschlusselement an dem mindestens einen Stirnflansch gebildet ist oder ein Anschlusselement mit dem Stirnflansch verbindbar ist.

51. Heißkammer nach einem der vorangehenden Ansprüche, **dadurch gekennzeichnet, dass** die Schale (32; 70) in Richtung zu der Heißkammerwand (16; 58) hin oder in Richtung von der Heißkammerwand (16; 58) weg druckbeaufschlagt ist.

52. Heißkammer nach einem der vorangehenden Ansprüche, **dadurch gekennzeichnet, dass** die Schale (150) an mindestens einem Ende mindestens einen Flansch (152; 154) aufweist.

53. Heißkammer nach Anspruch 52, **dadurch gekennzeichnet, dass** der mindestens eine Flansch (152) zu dem Ende hin abgeschrägt ist.

54. Heißkammer nach Anspruch 52 oder 53, **dadurch gekennzeichnet, dass** zwischen benachbarten Flanschen (152, 154) eine Ausnehmung (156) gebildet ist.

55. Heißkammer nach einem der vorangehenden Ansprüche, **dadurch gekennzeichnet, dass** an der Schale (164) Stützelemente (190) angeordnet sind, welche im Normalbetrieb beabstandet zu der Heißkammerwand (16) sind und an welchem sich die Heißkammerwand (16) im Überlastfall zur Bereitstellung eines Kraftpfads zur Hüllenstruktur (26) abstützen kann.

56. Heißkammer nach einem der vorangehenden Ansprüche, **gekennzeichnet durch** eine Ausbildung als Brennkammer.

57. Verwendung einer Heißkammer gemäß einem der vorangehenden Ansprüche in einem Wärmetauscher.

58. Verwendung einer Heißkammer gemäß einem der Ansprüche 1 bis 56 in einer Speichervorrichtung.

59. Verwendung einer Heißkammer gemäß einem der Ansprüche 1 bis 58 als Brennkammer.
